# EUROPÄISCHE PATENTSCHRIFT

(11) **EP 0 389 741 B1**
(45) Veröffentlichungstag und Bekanntmachung des Hinweises auf die Patenterteilung: **30.03.1994**
(21) Anmeldenummer: 90100566.0
(22) Anmeldetag: 12.01.1990
(51) Int. Cl.: F16G 1/28, F16H 7/02

(54) **Riementrieb bestehend aus einem Zahnriemen und einer Zahnscheibe**
Belt drive with toothed belt and pulley
Transmission à courroie à courroie et poulie crantées

(30) Priorität: 25.03.1989 DE 3909949
(43) Veröffentlichungstag der Anmeldung: 03.10.1990
(73) Patentinhaber: BRECO Kunststoffverarbeitungs-GmbH & Co. KG, D-32457 Porta Westfalica (DE)
(72) Erfinder: Breher, Rudolf, D-4952 Porta Westfalica (DE)

(56) Entgegenhaltungen:
- EP-A- 0 129 215
- DE-A- 1 650 657
- DE-B- 2 123 902
- DE-U- 8 903 742
- FR-A- 1 186 486
- US-A- 2 770 977

## Beschreibung

Die Erfindung bezieht sich auf einen aus einem Zahnriemen und einer Zahnscheibe bestehenden Riementrieb gemäß dem Oberbegriff des Patentanspruchs.

Normalerweise werden Zahnriemen beim Umlauf um eine Zahnscheibe zwischen zwei seitlichen Bordscheiben der Zahnscheibe seitlich geführt. Es gibt aber auch Zahnriementriebe, beispielsweise bei der Anwendung des Zahnriemens als Transportorgan in Transportanlagen, bei denen die Zahnscheibe nicht mit Bordscheiben seitlich über den Zahnriemen vorstehen kann. Hierfür ist z. B. aus der US-PS 2.770.977 ein selbstführender Zahnriemen bekannt, der auf seiner gezahnten Riemenseite eine oder mehrere in Riemenlängsrichtung verlaufende strangförmige Führungsrippen aufweist, die in passende Ringnuten auf der gezahnten Umfangsfläche der Zahnscheibe eingreifen, um dadurch den Zahnriemen auch ohne Bordscheiben auf der Zahnscheibe seitlich zu führen. Durch die strangförmige Führungsrippe wird die Kraftübertragungsfläche an den Flanken der Zahnrippen verringert, so daß, um die gleiche Antriebsleistung wie ohne die Führungsrippe übertragen zu können, der Zahnriemen breiter gemacht werden müßte. Dadurch wird aber auch der Umlauf des Zahnriemens um eine Zahnscheibe lauter.

Ausgehend von der vorgenannten Zahnriemenausbildung mit einer Führungsrippe für die Selbstführung auf einer bordscheibenlosen Zahnscheibe hat die Erfindung zur Aufgabe, den Umlauf des Zahnriemens um die Zahnscheibe geräuschärmer zu gestalten.

Diese Aufgabe wird gemäß der Erfindung in erster Linie durch die Ausbildung des Riementriebes mit den im kennzeichnenden Teil des Patentanspruchs enthaltenen Merkmalen gelöst. Für die Einlage kann beispielsweise ein Kunststoff mit einer Härte von 40 bis 65 Shore A verwendet werden, der weicher und elastischer ist als z. B. der vielfach für Zahnriemen verwendete und besonders geeignete Kunststoff Polyurethan. Beim Auflaufen des Zahnriemens auf die Zahnscheibe kommt zuerst die Führungsrippe des Zahnriemens mit der elastischen Einlage in der Ringnut der Zahnscheibe in Berührung, so daß die Kopfflächen der Riemenzähne und Grundflächen der Scheibenzahnnuten respektive die Kopfflächen der Scheibenzähne und Grundflächen der Riemenzahnnuten nicht mit erhöhter Geräuschentwicklung aufeinander schlagen, sondern erst nach radialer elastischer Zusammendrückung der Einlage und dadurch also gedämpft und geräuschärmer in Berührung kommen. Vorteilhafte Ausführungen des erfindungsgemäßen Riementriebes sind Gegenstand der Unteransprüche. Im folgenden werden anhand der Zeichnungen zwei Ausführungsbeispiele für den erfindungsgemäßen Riementrieb näher erläutert. Es zeigt
Figur 1 ein erstes Beispiel der erfindungsgemäßen Ausbildung des Zahnriemens des Riementriebes;
Figur 2 eine vorteilhafte Ausbildung einer zum Zahnriemen der Figur 1 passenden Zahnscheibe des Riementriebes;
Figur 3 ein anderes Ausführungsbeispiel des Zahnriemens des Riementriebes;
Figur 4 ein zu dem Zahnriemen der Figur 3 passendes Ausführungsbeispiel der Zahnscheibe.

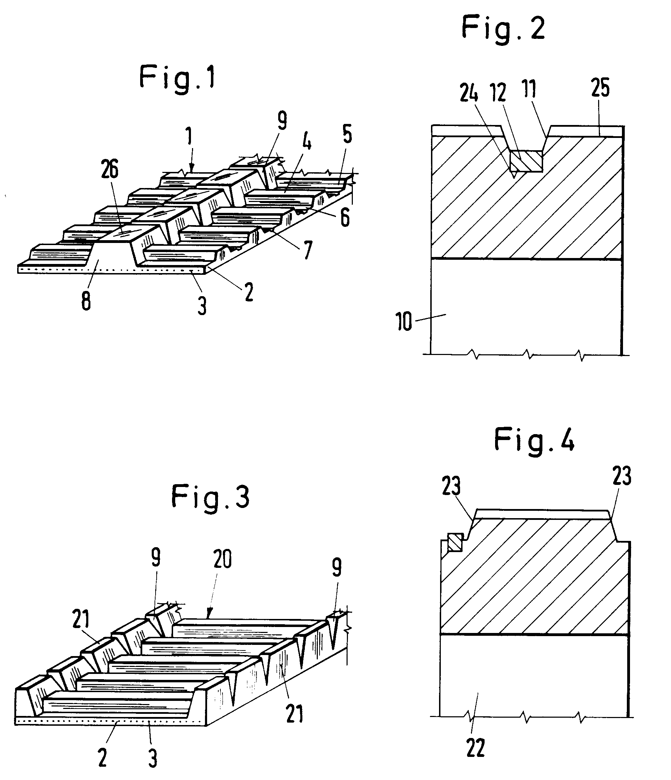

Der in der Figur 1 dargestellte Zahnriemen 1 aus Kunststoff oder dergleichen extrudierbarem Material besitzt eine aus Zahnrippen 4 und Zahnnuten 5 bestehende gezahnte Riemenseite und enthält eine in den Riemenkörper 2 eingebettete zugfeste Armierungseinlage 3. Auf der gezahnten Riemenseite ist der Zahnriemen entlang einer an der Riemenmitte verlaufenden Linie mit einer Führungsrippe 8 ausgebildet, die sogleich mit dem Zahnriemen aus dem gleichen Material in einer Riemenherstellungsvorrichtung geformt wird, also ein direkt bei der Riemenherstellung an den Riemenkörper 2 angespritzter Bestandteil des Zahnriemens 1 ist. An denjenigen Stellen, die seitlich neben den Riemenzahnnuten 5 liegen, ist die Führungsrippe 8 mit Einkerbungen 9 ausgebildet, die bis zu der unter der Grundfläche 6 der Riemenzahnnuten 5 liegenden Armierungseinlage 3 reichen. Dadurch kann mit schmalen stegartigen Wickelnasen der z. B. aus der DE-PS 2.123.902 bekannten Herstellungsvorrichtung nicht nur an den schmalen rillenartigen Vertiefungen 7 auf den Grundflächen 6, sondern auch im Bereich der Führungsrippe 8 durch die Einkerbungen 9 hindurch bei der Zahnriemenherstellung eine wichtige Abstützung der Armierungseinlage 3 in der neutralen Biegeebene des Zahnriemens 1 vorgenommen werden. Die in der Figur 2 dargestellte Zahnscheibe 10 des Riementriebes besitzt eine der Führungsrippe 8 des Zahnriemens 1 entsprechende mittige Ringnut 11, in die die Führungsrippe 8 zum Zwecke der Sicherung des Zahnriemens gegen seitliches Ablaufen von der Zahnscheibe eingreift. Auf dem Grund 24 der Ringnut 11 ist eine Einlage 12 angeordnet, die aus einem elastischen Material, z. B. aus einem elastischen Kunststoffmaterial besteht, welches weicher ist als das Material, aus dem der Zahnriemen einschließlich der einteilig angeformten Führungsrippe besteht bzw. üblicherweise hergestellt wird, wie z. B. Polyurethan. Vorzugsweise wird für die Einlage 12 ein weiches Material mit einer Härte von 40 bis 65 Shore A verwendet. Die Einlage 12 hat eine Höhe, die vor dem Auflaufen des Zahnriemens 1 auf die Zahnscheibe 10 um einen vorbestimmten Betrag größer ist als der Abstand zwischen dem Grund 24 der Ringnut 11 und der Kopffläche 26 der in die Ringnut eingelaufenen bzw. eingreifenden Führungsrippe 8. Dadurch läuft der Zahnriemen zuerst mit der Führungsrippe 8 auf die weich-elastische Einlage 12 auf, wodurch die sonstige getriebliche Berührung der Zahnrippen und Zahnnuten von Zahnriemen und Zahnscheibe gedämpft wird und ein sehr geräuscharmer Lauf des Zahnriemens auf der Zahnscheibe bewirkt wird. Bei dem in den Figuren 1 und 2 dargestellten Ausführungsbeispiel ist die Höhe der Zahnriemenführungsrippe 8 größer als die Höhe der Zahnrippen 4 des Zahnriemens 1 und liegt der Grund 24 der Zahnscheibenringnut 11 tiefer als die Grundfläche 25 der Zahnnuten der Zahnscheibe 10. Dies hat den Vorteil, daß die Einlage 12 auch im Bereich der Zahnnuten der Zahnscheibe 10 wenigstens mit einem Teil ihrer radialen Höhe in eine ringnutartige Vertiefung der Zahnscheibe versenkt ist und dadurch seitlich abgestützt ist. Vorteilhafterweise sind die Höhe der Zahnriemenführungsrippe 8 und die Tiefe der Zahnscheibenringnut 11 so groß bemessen, daß die Einlage 12 im nicht radial zusammengedrückten Zustand mit ihrer gesamten Höhe unterhalb der Grundfläche 25 der Zahnnuten der Zahnscheibe 10 liegt, so daß die Einlage 12 auch im radial zusammengedrückten Zustand nicht seitlich in die Zahnnuten der Zahnscheibe 10 weggedrückt werden kann.

Bei dem in den Figuren 3 und 4 dargestellten Ausführungsbeispiel des Riementriebes besitzt der Zahnriemen 20 an beiden Riemenrändern je eine mit den Einkerbungen 9 ausgebildete Führungsrippe 21, mit denen der Zahnriemen seitenführend an seitlichen Ringflächen 23 der Zahnscheibe 22 anliegen. Die Ringflächen 23 sind gegenüber den Außenseiten der Zahnscheibe 22 zurückversetzt und bilden dadurch an der Zahnscheibenperipherie ringförmige Aussparungen zur Aufnahme der Führungsrippen 21, so daß der Zahnriemen 20 mit seinen beiden seitlichen Führungsrippen 21 nicht über die Außenseiten der Zahnscheibe 22 vorsteht. Wie im linken Teil der Figur 4 angedeutet ist, ist an der radialen Grundfläche der ringförmigen Aussparung eine der Einlage 12 der Figur 2 entsprechende weichelastische Einlage angeordnet, die gleichartig auch in der anderen ringförmigen Aussparung angeordnet sein kann, um den Zahnriemen 20 mit beiden seitlichen Führungsrippen 21 gedämpft und geräuscharm auf die Zahnscheibe 22 auflaufen zu lassen.

## Patentansprüche

1. Riementrieb bestehend aus einem Zahnriemen und einer Zahnscheibe, wobei der aus Kunststoff oder dergl. extrudierbarem Material bestehende Zahnriemen eine in den Riemenkörper eingebettete zugfeste Armierungseinlage enthält und eine in Riemenlängsrichtung verlaufende, die Zahnrippen des Zahnriemens kreuzende Führungsrippe aufweist, die beim Umlauf des Zahnriemens um die Zahnscheibe in eine Ringnut an dem Umfang der Zahnscheibe eingreift und im Bereich der Zahnnuten des Zahnriemens mit Einkerbungen zur Erhöhung der Biegbarkeit der Führungsrippe versehen ist, dadurch gekennzeichnet, daß auf dem Grund (24) der Ringnut (11) der Zahnscheibe (10) eine Einlage (12) angeordnet ist, die aus einem Werkstoff mit einer gegenüber dem Zahnriemenmaterial weicheren Elastizität besteht und deren Höhe vor dem Auflaufen des Zahnriemens (1) auf die Zahnscheibe (10) um einen vorbestimmten Betrag größer ist als der Abstand zwischen dem Grund (24) der Ringnut (11) und der Kopffläche (26) der in die Ringnut (11) eingreifenden Führungsrippe (8)

2. Riementrieb nach Anspruch 1, dadurch gekennzeichnet, daß die Höhe der Zahnriemenführungsrippe (8) größer ist als die Höhe der Zahnrippen (4) des Zahnriemens (1) und daß der Grund (24) der Zahnscheibenringnut (11) tiefer liegt als die Grundfläche (25) der Zahnnuten der Zahnscheibe (10).

3. Riementrieb nach Anspruch 1 oder 2, dadurch gekennzeichnet, daß die Höhe der Zahnriemenführungsrippe (8) und die Tiefe der Zahnscheibenringnut (11) so groß bemessen sind, daß die Einlage (12) im nicht radial zusammengedrückten Zustand mit ihrer gesamten Höhe unterhalb der Grundfläche (25) der Zahnnuten der Zahnscheibe (10) liegt.

## Claims

1. Belt drive with toothed belt and pulley, in which the toothed belt consisting of plastic or a similar extrudable material contains a tension-proof reinforcing insert embedded into the belt body and has a guide rib which extends in the longitudinal direction of the belt and traverses the tooth ribs of the toothed belt, and which, when the toothed belt rotates about the toothed pulley, engages an annular groove on the periphery of the toothed pulley and is provided in the region of the tooth grooves of the toothed belt with notches for increasing the flexibility of the guide rib, characterised in that an insert (12) consisting of a material with softer resilience than the material of the toothed belt is arranged on the base (24) of the annular groove (11) of the toothed pulley (10), the height of said insert before the toothed belt (1) feeds on to the toothed pulley (10) being greater by a predetermined amount than the distance between the base (24) of the annular groove (11) and the tip surface (26) of the guide rib (8) engaging the annular groove (11).

2. Belt drive according to claim 1, characterised in that the height of the guide rib (8) of the toothed belt is greater than the height of the tooth ribs (4) of the toothed belt (1) and that the base (24) of the annular groove (11) of the toothed pulley is lower than the base surface (25) of the tooth grooves of the toothed pulley (10).

3. Belt drive according to claim 1 or claim 2, characterised in that the height of the guide rib (8) of the toothed belt and the depth of the annular groove (11) of the toothed pulley are such that, in the non-radially compressed state, the entire height of the insert (12) is situated below the base surface (25) of the tooth grooves of the toothed pulley (10).

## Revendications

1. Transmission à courroie se composant d'une courroie dentée et d'une poulie dentée, la courroie dentée se composant en matière plastique ou matière similaire d'extrusion comprenant une couche d'armature résistante à la traction et incorporée dans le corps de courroie et présentant une rainure de guidage qui s'étend dans le sens longitudinal de la courroie et qui croise les rainures de dent de la courroie dentée, rainure de guidage qui, à la révolution de la courroie dentée autour de la poulie dentée, s'engage dans une gorge annulaire à la périphérie de la poule dentée et qui est munie dans la zone des gorges de dent de la courroie dentée d'encoches afin d'augmenter la flexibilité de la nervure de guidage, caractérisée en ce que, sur le fond (24) de la gorge annulaire (11) de la poulie dentée (10), il est disposé une couche (12) qui se compose d'une matière ayant une élasticité plus souple que la matière de la courroie et dont la hauteur, avant la montée de la courroie dentée (1) sur la poulie dentée (10), est supérieure d'une somme prédéterminée à la distance entre le fond (24) de la gorge annulaire (11) et la surface de sommet (26) de la rainure de guidage (8) s'engageant dans la gorge annulaire (11).

2. Transmission à courroie selon la revendication 1, caractérisée en ce que la hauteur de la nervure de guidage (8) de la courroie dentée est supérieure à la hauteur des nervures de dent (4) de la courroie dentée (1) et que le fond (24) de la gorge annulaire (11) de la poulie dentée est plus bas que la surface de fond (25) des gorges de dent de la poulie dentée (10).

3. Transmission à courroie selon la revendication 1 ou 2, caractérisée en ce que la hauteur de la nervure de guidage (8) de la courroie dentée et la profondeur de la gorge annulaire (11) de la poulie dentée sont dimensionnées de sorte que la couche (12), à l'état comprimé non radialement, se trouve avec toute sa hauteur située en dessous de la surface de fond (25) des gorges de dent de la poulie dentée (10).
